# EUROPÄISCHE PATENTSCHRIFT

(11) **EP 0 755 412 B1**
(45) Veröffentlichungstag und Bekanntmachung des Hinweises auf die Patenterteilung: **29.12.1997**
(21) Anmeldenummer: 95916608.3
(22) Anmeldetag: 05.04.1995
(51) Int. Cl.: C08F 8/00, C08F 8/30, C08F 8/34, C08F 8/28, C10L 1/18, C10L 1/22, C10M 143/00

(54) **KRAFT- ODER SCHMIERSTOFFADDITIVE, VERFAHREN ZU IHRER HERSTELLUNG SOWIE KRAFT- ODER SCHMIERSTOFFZUSAMMENSETZUNGEN, ENTHALTEND DIESE ADDITIVE**
FUEL OR LUBRICANT ADDITIVES, METHOD OF PRODUCING THEM AND FUEL OR LUBRICANT COMPOSITIONS CONTAINING THE ADDITIVES
ADDITIFS POUR CARBURANTS ET LUBRIFIANTS, LEUR PROCEDE DE PRODUCTION, ET COMPOSITIONS DE CARBURANTS OU DE LUBRIFIANTS CONTENANT CES ADDITIFS

(30) Priorität: 12.04.1994 DE 4412489
(43) Veröffentlichungstag der Anmeldung: 29.01.1997
(73) Patentinhaber: BASF AKTIENGESELLSCHAFT, 67056 Ludwigshafen (DE)
(72) Erfinder: OPPENLÄNDER, Knut, D-67061 Ludwigshafen (DE); MOHR, Jürgen, D-67269 Grünstadt (DE); MÜLLER, Hans-Joachim, D-67269 Grünstadt (DE); POSSELT, Dietmar, D-67069 Ludwigshafen (DE); GÜNTHER, Wolfgang, D-67582 Mettenheim (DE)
(86) Internationale Anmeldenummer: EP9501249
(87) Internationale Veröffentlichungsnummer: WO9527738

(56) Entgegenhaltungen:
- EP-A- 0 342 792
- EP-A- 0 400 844
- WO-A-94/13711
- DE-A- 3 611 230
- FR-A- 1 489 559
- US-A- 4 772 406

## Beschreibung

Die Erfindung betrifft Kraft- und Schmierstoffadditive auf Basis langkettiger Kohlenwasserstoffreste mit einer polaren Endgruppe, ein halogenfreies, einstufiges Verfahren zur Herstellung dieser Additive, bei dem an die Doppelbindung eines langkettigen Olefines in einer radikalischen Additionsreaktion polare Reaktionspartner addiert werden sowie Kraft- oder Schmierstoffzusammensetzungen, die diese Additive enthalten.

Vergaser und Einlaßsysteme von Ottomotoren, aber auch Einspritzsysteme für die Kraftstoffdosierung in Otto- und Dieselmotoren werden in zunehmendem Maße durch Verunreinigungen belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.

Diese Rückstande verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas großer werden und der Benzinverbrauch steigt.

Es ist bekannt, daß zur Vermeidung dieser Nachteile Kraftstoffadditive zur Reinhaltung von Ventilen und Vergasern bzw. Einspritzsystemen verwendet werden (vgl. z.B.: M. Rossenbeck in Katalysatoren, Tenside, Mineralöladditive, Hrsg. J. Falbe, U. Hasserodt, S. 223, G. Thieme Verlag, Stuttgart 1978).

Je nach Wirkungsweise aber auch dem bevorzugten Wirkort solcher Detergent-Additive unterscheidet man heute zwei Generationen.

Die erste Additiv-Generation konnte nur die Bildung von Ablagerungen im Ansaugsystem verhindern, nicht aber bereits vorhandene Ablagerungen wieder entfernen, wohingegen die modernen Additive der zweiten Generation beides bewirken können (keep-clean- und clean-up-Effekt), und zwar insbesondere auch aufgrund ihrer hervorragenden Thermostabilitat an Zonen höherer Temperatur, nämlich an den Einlaßventilen.

Das molekulare Bauprinzip dieser als Detergentien wirkenden Additive kann verallgemeinernd angegeben werden als Verknüpfung polarer Strukturen mit meist höhermolekularen, unpolaren oder oleophilen Resten.

Vertreter der zweiten Additiv-Generation sind oft Produkte auf der Basis von Polyisobuten im unpolaren Molekülteil. Hier wiederum heben sich Additive vom Polyisobutylamin-Typ besonders hervor.

Derartige Detergentien enthält man, ausgehend von Polyisobutenen, im wesentlichen nach zwei mehrstufigen Syntheseverfahren.

Das erste verlauft über eine Chlorierung des polymeren Grundkörpers, gefolgt von einer nucleophilen Substitution des polymeren Grundkörpers durch Amine oder bevorzugt Ammoniak. Nachteilig ist bei diesem Verfahren, abgesehen von der Zweistufigkeit der Synthese, die Verwendung von Chlor, die zur Folge hat, daß chlor- oder chloridhaltige Produkte auftreten, was heute keinesfalls mehr erwünscht ist.

Im zweiten Verfahren erhalt man Polyisobutylamine aus Polyisobuten via Hydroformylierung, gefolgt von einer reduktiven Aminierung, d.h. einem ebenfalls zweistufigen Prozeß, der auch eine entsprechende Infrastruktur voraussetzt.

Von besonderem technischen und wirtschaftlichen Interesse sind daher einfache, einstufige, chlorfreie Syntheseverfahren für Detergentien und Dispergatoren oder Verbindungen, die beide Eigenschaftsprofile in sich vereinigen, und in Standardapparaturen durchgeführt werden können.

Aus der GB-A-1,383,423 ist eine Methode zur Herstellung von Alkylpolyaminen bekannt, die als Vergaserdetergentien verwendet werden können. Hierbei wird ein α-Olefin mit mindestens 15 C-Atomen in Gegenwart eines radikalbildenden Initiators mit einem Polyamin umgesetzt. Als α-Olefine werden besonders bevorzugt Polyisobutylene eingesetzt.

In der EP-B-0 342 792 ist ein Verfahren für die Herstellung eines Polybutens mit einer Thioetherfunktion beschrieben, bei dem unter Bedingungen, bei welchen freie Radikale erzeugt werden, ein organisches Thiol mit einem flüssigen Polybuten, das eine Kohlenstoff-Kohlenstoff-Doppelbindung pro Molekül und ein zahlenmittleres Molekulargewicht von 200 bis 10000 aufweist, umgesetzt wird.

Der vorliegenden Erfindung lag die Aufgabe zugrunde, als Kraftoder Schmierstoffadditive geeignete Verbindungen zur Verfügung zu stellen, die über eine einstufige chlorfreie Synthese ohne hohen technischen Aufwand zugänglich sind.

Demgemäß wurden Kraft- oder Schmierstoffadditive gefunden , die erhältlich sind durch Umsetzung eines von einem oder mehreren 1-Alkenen mit 3 bis 24, vorzugsweise 3 bis 10 und besonders bevorzugt 3 bis 6 Kohlenstoffatomen und 0 bis 50 Gew.-% Ethen abgeleiteten ethylenisch ungesättigten Poly-1-alkens mit
a) einer Verbindung der allgemeinen Formel I, 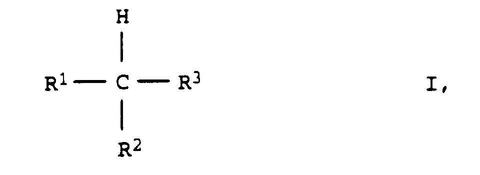 und/oder
b) einer Verbindung der allgemeinen Formel II, 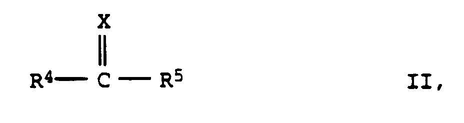 worin
   - X: für O oder NR⁷ steht,
   - R¹: die Bedeutung
   CN, COOH, C(O)OR⁹, C(O)O(O)CR⁶, C0NR⁶R⁷, C(O)R⁹, C(S)R⁹, CHO, CH(NR⁶R⁷)R⁶, SCR⁶R⁷R⁸, NR⁷R⁹ oder OR⁶ hat,
   - R² und R³: gleich oder verschieden sind und R¹, Wasserstoff oder einen hiervon verschiedenen organischen Rest darstellen,
   - R⁴ und R⁵: gleich oder verschieden sind und Wasserstoff, OR⁹, NR⁷R⁸ oder einen gegebenenfalls substituierten (Cyclo)alkylrest oder Arylrest bedeuten,
   - R⁶, R⁷ und R⁸: gleich oder verschieden und Wasserstoff oder ein organischer Rest sind und
   - R⁹: einen von Wasserstoff verschiedenen organischen Rest bedeutet,
   wobei mindestens zwei der Reste R¹ bis R⁹ Teil eines Ringes sein können.

Gegenstand der Erfindung ist außerdem ein Verfahren zur Herstellung dieser Kraft- oder Schmierstoffadditive bei dem ein von einem oder mehreren 1-Alkenen mit 3 bis 24, vorzugsweise 3 bis 10 und besonders bevorzugt 3 bis 6 Kohlenstoffatomen und 0 bis 50 Gew.-% Ethen abgeleitetes Poly-1-alken in Gegenwart eines radikalbildenden Initiators unter radikalbildenden Bedingungen mit a) einer Verbindung der allgemeinen Formel I und/oder b) einer Verbindung der allgemeinen Formel II umgesetzt wird, sowie deren Verwendung in Kraft- oder Schmierstoffzusammensetzungen, insbesondere für Verbrennungsmotoren.

Als ethylenisch ungesättigte Poly-1-alkene werden in einer bevorzugten Ausführungsform der Erfindung Poly- bzw. Oligoolefine mit einem zahlenmittleren Molekulargewicht von 100 bis 15000, erhalten aus einem oder mehreren 1-Alkenen mit 3 bis 24 Kohlenstoffatomen und 0 bis 50 Gew.-% Ethen eingesetzt. Besonders bevorzugt sind hiervon Polyisobutene mit einem zahlenmittleren Molekulargewicht von 150 bis 5000, insbesondere von 250 bis 1000, die sich von Isobuten und 0 bis 30 Gew.-% n-Buten ableiten und z.B. gemaß der Lehre der DE-A-27 02 604 erhältlich sind.

In einer weiteren bevorzugten Ausführungsform werden Poly-l-alkene mit einem Anteil von mindestens 95 %, vorzugsweise mindestens 98 % an endstandigen Doppelbindungen eingesetzt, wie sie z.B. durch Polymerisation bzw. Oligomerisierung der Monomerbausteine in Gegenwart eines Metallocen-Katalysators erhalten werden.

Die erfindungsgemäß eingesetzten, sich von einem oder mehreren 1-Alkenen mit 3 bis 24 Kohlenstoffatomen und 0 bis 50 Gew.-% Ethen abgeleiteten Poly-1-alkene, vorzugsweise Poly-1-n-alkene, lassen sich beispielsweise dadurch herstellen, daß man 1-Alkene, vorzugsweise 1-n-Alkene, in Gegenwart eines Metallocen-Katalysators der allgemeinen Formel III

CpₘMXₙYᵣ III,

in der Cp eine unsubstituierte Cyclopentadienyl-Einheit und/oder eine Mono-C₁- bis C₄-alkyl-cyclopentadienyl-Einheit, M ein Zirkonium- oder Hafniumatom ist und in der die Liganden X für Hydrid- und/oder Halogenionen und /oder eine Methylgruppe stehen, in Gegenwart einer aluminiumorganischen Verbindung, vorzugsweise eines Aluminoxans, als Cokatalysator polymerisiert, dabei den Katalysator bezüglich des Aluminoxan-Cokatalysators in einem Mengenverhältnis einsetzt, das einem M/Al-Atomverhältnis von 1:250 bis 1:1000 entspricht, und Temperaturen von 50 bis 110°C und einen Druck von 30 bis 100 bar anwendet.

Bei den Katalysatoren III handelt es sich um sogenannte Zirkonocene und Hafnocene, mithin um Komplexe des vierwertigen Zirkoniums und Hafniums, bei denen das Metallatom M sandwichartig zwischen zwei unsubstituierten und/oder C₁-bis C₄-Monoalkylsubstituierte cyclopentadienyl-Gruppen Cp gebunden ist, wobei die restlichen Valenzen des Zentralatoms M durch Hydrid- und/oder Halogenionen und/oder durch Methylgruppen abgesättigt sind. Besonders bevorzugt werden solche Zirkonocen- und Hafnocenkatalysatoren im erfindungsgemaßen Verfahren verwendet, deren Cyclopentadienyl-Gruppen unsubstituiert sind. Als Halogenionen können sowohl Fluor-, Chlor-, Brom- und/oder Jodanionen an das Metallatom gebunden sein.

Beispiele für geeignete Katalysatoren sind:
Cp₂ZrF₂, Cp₂ZrCl₂, Cp₂ZrCl₂, Cp₂ZrJ₂, Cp₂ZrCl, Cp₂Zr(CH₃)Cl, Cp₂Zr(CH₃)₂, Cp₂HfF₂, Cp₂HfCl₂, Cp₂HfBr₂, Cp₂HfJ₂, Cp₂HfHCl, Cp₂Hf(CH₃)Cl, Cp₂Hf(CH₃)₂.

Zweckmäßigerweise wird bei der Oligomerisierung nur ein Katalysator eingesetzt, es ist aber auch möglich, Mischungen verschiedener Katalysatoren zu verwenden. Bevorzugte Liganden X sind Chlorid, Hydrid und die Methylgruppe, als Zentralatom M wird für die Katalysatoren III Zirkonium besonders bevorzugt. Besonders bevorzugt wird Zirkonocenchlorid der Formel Cp₂zrCl₂ als Katalysator benutzt, dessen Cyclopentadienylgruppen unsubstituiert sind.

Die Katalysatoren können auf einfache Weise nach bekannten Verfahren, z.B. nach Brauer (Hrsg.), Handbuch der Praparativen Anorganischen Chemie, Band 2, 3.Auflage, Seite 1395 bis 1397, Enke, Stuttgart 1978, synthetisiert werden.

Als Cokatalysatoren werden aluminiumorganische Verbindungen, vorzugsweise Aluminoxane verwendet. Aluminoxane bilden sich bei der partiellen Hydrolyse aluminiumorganischer Verbindungen, beispielsweise solcher der allgemeinen Formeln AlR₃, AlR₂Y und Al₂R₃Y₃, in denen die Reste R z.B. für C₁- bis C₁₀-Alkylgruppen, vorzugsweise C₁- bis C₅-Alkylgruppen, für C₃- bis C₁₀-Cycloalkylgruppen, C₇- bis C₁₂-Aralkyl- oder Alkarylgruppen und/oder eine Phenyl- oder Naphthylgruppe stehen können und in denen Y ein Wasserstoffatom, ein Halogenatom, vorzugsweise ein Chlor- oder Bromatom, oder eine C₁- bis C₁₀-Alkoxygruppe, vorzugsweise eine Methoxy- oder Ethoxygruppe, sein kann. Die partielle Hydrolyse derartiger aluminiumorganischer Verbindungen kann nach verschiedenerlei Verfahren, z.B. nach dem Verfahren der DE-A-3 240 383 oder nach dem in EP-A-0 268 214 angegebenen, erfolgen. Die dabei entstehenden, sauerstoffhaltigen Aluminoxane sind im allgemeinen keine einheitlichen Verbindungen, sondern Oligomerengemische der allgemeinen Formel IV 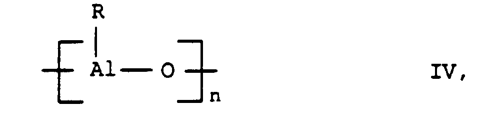 in der in der Regel n eine Zahl von 6 bis 20 ist und R die oben genannte Bedeutung hat. Werden aluminiumorganische Verbindungen mit verschiedenen Resten R oder Gemische aluminiumorganischer Verbindungen mit unterschiedlichen Resten R hydrolysiert, so entstehen Aluminoxane mit verschiedenerlei Resten R, die ebenfalls als Cokatalysator eingesetzt werden können. Zweckmäßigerweise werden allerdings Aluminoxane als Cokatalysatoren benutzt. Als bevorzugtes Aluminoxan dient Methylaluminoxan. Da die als Cokatalysatoren vorzugsweise verwendeten Aluminoxane, bedingt durch ihre Herstellungsweise, keine einheitlichen Verbindungen sind, wird im folgenden die Molaritat von Aluminoxanlösungen auf deren Aluminiumgehalt bezogen.

Zur Polymerisation wird der Katalysator bezüglich des Cokatalysators in einer Menge eingesetzt, die einem M/Al-Atomverhältnis von im allgemeinen 1:250 bis 1:1000, vorzugsweise von 1:300 bis 1:600 und insbesondere von 1:400 bis 1:500 entspricht.

Die Polymerisation des 1-Alkens wird vorteilhaft in flüssiger Phase, zweckmäßigerweise unter Verwendung geringer Mengen eines Lösungsmittels, vorzugsweise eines aliphatischen oder aromatischen Kohlenwasserstoffes, wie Benzol, Toluol, Xylol, Ethylbenzol, Cumol, Naphthalin, Tetralin, Hexan, Heptan, Octan, Isooctan, Nonan, Decan, Dodecan, Cyclohexan, Decalin, Petrolether oder Ligroin vorgenommen. Als besonders bevorzugte Lösungsmittel werden Toluol und Xylol verwendet. In diesem Verfahren werden Lösungsmittel/1-Alken-Volumenverhaltnisse von im allgemeinen 1:20 bis 1:500, vorzugsweise von 1:30 bis 1:200 und besonders bevorzugt von 1:40 bis 1:100 eingestellt, wobei sich das Volumen des 1-Alkens auf dessen Volumen beim jeweils angewandten Druck bezieht. Unter den angewandten Bedingungen ist das 1-Alken flüssig. Die Polymerisation wird im allgemeinen bei Temperaturen von 50 bis 110°C, besonders bevorzugt bei 60 bis 90°C und bei einem Druck von 30 bis 100, vorzugsweise von 30 bis 50 bar ausgeführt. Das Metallocen/l-Alken-Verhältnis ist in der Regel nicht kritisch für das Verfahren, zweckmäßigerweise werden allerdings Metallocen/ 1-Alken-Molverhältnisse von 1:50 bis 1:250000, vorzugsweise von 1:70 bis 1:200000 und insbesondere von 1:90 bis 1:190000 angewandt.

Die Polymerisation kann sowohl chargenweise, z.B. in Rührautoklaven, oder kontinuierlich, beispielsweise in Rohrreaktoren, durchgeführt werden. Nach der Abtrennung des Katalysators durch Destillation der Produkte oder durch dessen Hydrolyse und anschließende Filtration der ausgefallenen Feststoffe wird das Reaktionsgemisch zweckmäßigerweise destillativ, gewünschtenfalls bei vermindertem Druck, aufgearbeitet.

Das bei diesem Verfahren bevorzugt als Rohstoff verwendete Propen kann aus vielerlei Quellen stammen, z.B. von Crack-Gasen, beispielsweise aus Steamcrackern. Ebenso kann Propen verwendet werden, wie es z.B. bei der Propandehydrierung gebildet wird. Der Einsatz von Propen kann in gereinigter Form erfolgen, es kann allerdings auch in Gemischen mit anderen Kohlenwasserstoffen, die sich unter den Bedingungen der Umsetzung inert verhalten, eingesetzt werden.

Das Polymerisations-Verfahren ermöglicht die selektive Herstellung von Poly-1-alkenen mit endstandigen Doppelbindungen, insbesondere die selektive Herstellung von Propenpolymeren mit hohen Produktivitaten.

Die erfindungsgemaß eingesetzten Poly-1-alkene, insbesondere die Copolymere aus Ethen und 1-n-Alkenen, lassen sich auch nach anderen bekannten Verfahren herstellen, wie sie z.B. in der EP-A-0 441 548 beschrieben sind. Auch hier wird ein Metallocen-Katalysator in Kombination mit einem Aluminoxan eingesetzt. Als Metallocene werden hierbei ebenfalls Cyclopentadienyl- Übergangsmetall-Verbindungen der Formel III verwendet, wobei als Übergangsmetalle Ti, Zr und Hf bevorzugt sind.

Die auf diese Weise herstellbaren Poly-1-alkene können im erfindungsgemaßen Verfahren anschließend, gegebenenfalls nach vorheriger Destillation, in an sich bekannter Weise weiter umgesetzt werden.

Zur Herstellung der erfindungsgemaßen Additive werden die Poly-1-alkene hierzu im allgemeinen bei Temperaturen von 0 bis 200°C in Gegenwart eines radikalbildenden Initiators mit den Verbindungen der allgemeinen Formel I und/oder II umgesetzt.

Diese Verbindungen haben an mindestens einer Stelle des Molekülgerüstes mindestens ein leicht unter Ausbildung einer radikalischen Zwischenstufe abstrahierbares H-Atom, so daß eine Additionsreaktion dieser Verbindungen an die mindestens eine ethylenische Doppelbindung des Poly-1-alkens stattfindet. Bevorzugte Verbindungen der Formel I und/oder II sind erfindungsgemäß solche, bei denen mindestens einer der Substituenten R⁴ und R⁵ und/oder mindestens einer der Substituenten R⁶ und R⁷ von Wasserstoff verschieden ist. Radikalbildende Initiatoren, die Erzeugung von Radikalen sowie radikalische Additionsreaktionen an ethylenisch ungesättigten Verbindungen sind an sich bekannt. Derartige radikalische Additionsreaktionen sind zum Beispiel in folgenden Publikationen beschrieben:
H.-H. Vogel, Synthesis 1970, S. 99ff;
D. Elad, Chemistry and Industry 24 (1962), S. 362;
Friedmann, Lester, Tetrahedron Letters 1961, S. 238ff;
Nikishin, Vinogradov, Fedorova, J.C.S. Chem. Commun. 1973, S. 693;
M. Regitz, B. Giese in Houben-Weyl, Methoden der Organischen Chemie, 4. Aufl., Vol. E 19a (1989).

Die Reaktionsbedingungen bei der Umsetzung der erfindungsgemaßen Poly-1-alkene mit den Verbindungen der Formel I und/oder II variieren in Abhängigkeit von den verwendeten Einsatzstoffen und der Methode zur Radikalerzeugung. Die Reaktionstemperatur liegt jedoch im allgemeinen zwischen 0 und 200°C.

Die Reaktion kann sowohl in Substanz als auch unter Verwendung inerter Lösungsmittel, wie z.B. aliphatischen oder aromatischen Kohlenwasserstoffen, durchgeführt werden.

Das molare Verhältnis von Poly-1-alken zu Verbindungen der Formel I und/oder II liegt in der Regel im Bereich von 1:1 bis 1:30. Eine vollständige Umsetzung der ethylenischen Doppelbindungen des Poly-1-alkens ist jedoch nicht notwendig. Eine unvollständige Umsetzung kann unter Umständen sogar vorteilhaft sein.

Die Herstellung der erfindungsgemaßen Additive erfolgt beispielsweise derart, daß in einem Mehrhalskolben, der zweckmäßigerweise mit Rührer, Innenthermometer, Rückflußkühler und Tropftrichter ausgestattet ist, ca. zwei Drittel der Verbindung der Formel I und/oder II, eventuell in einem geeigneten Lösungsmittel, bei der gewünschten Reaktionstemperatur vorgelegt werden und dann unter Rühren eine Mischung aus poly-1-alken, Initiator und der Restmenge an Verbindung der Formel I und/oder II, eventuell unter Verwendung eines inerten Lösungsmittels, langsam zugetropft wird. Nach beendeter Zugabe wird die Reaktionsmischung zur Vervollständigung der Umsetzung bei der gewählten Temperatur gegebenenfalls nachgerührt. Die Verfolgung des Reaktionsverlaufes kann IR-spektroskopisch unter Beobachtung der charakteristischen Absorptionsbande der endständigen Doppelbindung bei ca. 890 cm⁻¹ geschehen. Die Reaktionsprodukte fallen nach Entfernung des Lösungsmittels und des Überschusses der Verbindung der Formel I und/oder II meist in Form eines viskosen, farblos bis bernsteinfarbenen Rückstandes an.

In Kraftstoffzusammensetzungen, insbesondere für Verbrennungsmotoren, wird das erfindungsgemaße Additiv vorzugsweise in einer Menge von 10 bis 5000 ppm, insbesondere 100 bis 2000 ppm, eingesetzt.

In Schmierstoffzusammensetzungen wird das erfindungsgemäße Additiv vorzugsweise in einer Menge von 0,5 bis 10 Gew.-%, insbesondere 1 bis 3 Gew.-%, bezogen auf das Gesamtgewicht der Zusammensetzung, eingesetzt.

Die in den erfindungsgemaßen Kraft- oder Schmierstoffen eingesetzten Additive enthalten aufgrund ihrer Herstellung kein Halogen, was sie für die Verwendung in Kraft- oder Schmierstoffen besonders geeignet macht.

Die erfindungsgemäßen Additive wirken aufgrund ihrer Struktur sowohl als Dispergator wie auch als Detergent. Das heißt, sie führen als Detergentien zur Reinhaltung von Ventilen und Vergasern bzw. Einspritzsystemen. Als Dispergator tragen sie, nachdem sie über den Brennraum in den Schmiermittelkreislauf des Motors gelangt sind, zu einer Verbesserung der Schlammdispergierung im Motoröl bei.

Sollen in erster Linie die dispergierenden Eigenschaften der erfindungsgemaßen Additive genutzt werden, so kann man sie auch mit herkömmlichen Detergentien als zusätzlichen Additiven kombinieren.

Als Detergent-Komponente in der Mischung mit den erfindungsgemäßen Stoffen als Dispergatoren kann prinzipiell jedes bekannte der hierfür geeigneten Produkte eingesetzt werden, wie sie z.B. bei J. Falbe, U. Hasserodt, Katalysatoren, Tenside und Mineralöladditive, G. Thieme Verlag, Stuttgart 1978, S. 221 f. oder bei K. Owen, Gasoline and Diesel Fuel Additives, John Wiley & Sons, 1989, S. 23 ff., beschrieben sind.

Vorzugsweise verwendet man N-haltige Detergentien, z.B. Verbindungen, die eine Amin- oder Amid-Gruppe enthalten. Insbesondere geeignet sind Polyisobutylamine gemäß EP-A-0 244 616, Ethylendiamintetraessigsäureamide und/oder -imide gemäß EP-A-0 188 786 oder Polyetheramine gemäß EP-A-0 244 725, wobei auf die Definitionen in diesen Literaturstellen Bezug genommen wird. Die dort beschriebenen Produkte verfügen herstellungsbedingt ebenfalls über den Vorteil, chlor- bzw. chloridfrei zu sein.

Soll in erster Linie die Detergent-Wirkung der erfindungsgemaßen Verbindungen genutzt werden, so können diese Stoffe auch mit Trägerölen kombiniert werden. Derartige Trageröle sind bekannt. Insbesondere eignen sich Trägeröle auf Polyglykolbasis, z.B. entsprechende Ether und/oder Ester, wie sie in der US-A-5 004 478 oder der DE-A-38 38 918 beschrieben sind. Auch Polyoxyalkylenmonoole mit Kohlenwasserstoffendgruppen (US-A-4 877 416) oder Trägeröle, wie sie in der DE-A-41 42 241 offenbart sind, können eingesetzt werden.

Als Kraftstoffe für Ottomotoren kommen verbleites und insbesondere unverbleites Normal- und Superbenzin in Betracht. Die Benzine können auch andere Komponenten als Kohlenwasserstoffe, z.B. Alkohole wie Methanol, Ethanol, tert.-Butanol sowie Ether, z.B. Methyl-tert.-butylether enthalten. Neben den erfindungsgemaßen Additiven enthalten die Kraftstoffe in der Regel noch weitere Zusätze wie Korrosionsinhibitoren, Stabilisatoren, Antioxidantien und/oder weitere Detergentien.

Korrosionsinhibitoren sind meist Ammoniumsalze org. Carbonsäuren, die durch entsprechende Struktur der Ausgangsverbindungen zur Filmbildung neigen. Auch Amine zur Absenkung des pH-Wertes finden sich häufig in Korrosionsinhibitoren. Als Buntmetallkorrosionsschutz werden meist heterocyclische Aromaten eingesetzt.

### Beispiele

### 1. Herstellung der erfindungsgemäßen Additive

### Beispiel 1

In einem Mehrhalskolben, ausgestattet mit Rührer, Innenthermometer, Rückflußkühler und Tropftrichter wurden 290 g Morpholin vorgelegt und auf Rückflußtemperatur (ca. 130°C) erhitzt. Anschließend wurde eine Mischung aus dem Initiator Di-tert.-butylperoxid (5,3 g), 500 g Polyisobuten (Zahlenmittel d. Molgewichtes 1000) und 145,8 g Morpholin langsam zugetropft. Nach beendetem Zutropfen wurde insgesamt 12 h bei 130°C nachgerührt, wobei während dieser Zeit portionsweise nochmals insgesamt 5,3 g Di-tert.-butylperoxid zugegeben wurden. Anschließend wurde das Reaktionsgemisch von überschüssigem Reagens befreit.

### Beispiele 2 bis 7

Es wurde gearbeitet wie in Beispiel 1, jedoch unter Verwendung der in Tabelle 1 angegebenen Mengen verschiedener Verbindungen der allgemeinen Formel I bzw. II und Initiator. Außerdem wurde jeweils auf die in der Tabelle 1 angegebene Temperatur erhitzt und diese Temperatur während der Umsetzung und dem anschließenden Nachrühren beibehalten.

**Tabelle 1**

| Bsp. Nr. | Olefin (Mol) | Verbindungen I bzw. II (Mol) | Initiator (Mol) | Temp. [°C] |
|---|---|---|---|---|
| 1 | Polyisobuten (1) | Diethylmalonat (10) | 0,1 | 140 |
| 2 | Polyisobuten (1) | Isobutyraldehyd (2,5) | 0,25 | 160 |
| 3 | Polyisobuten (1) | Pyrrolidon (10) | 0,1 | 140 |
| 4 | Polyisobuten (1) | Morpholin (10) | 0,2 | 130 |
| 5 | Polyisobuten (1) | Dimethylformamid (5) | 0,5 | 145 |
| 6 | Polyisobuten (1) | Cyclopentanon (2,5) | 0,25 | 160 |
| 7 | Polyisobuten (1) | Allylamin (2,5) | 0,1 | 75 |

Die Wirkung der hergestellten Derivate als Ventilreiniger wurde in Motorentests geprüft.

### 2. Motorentests

Die Motorversuche wurden in einem Opel-Kadett 1,2 1 Motor nach CEC F/04/A/87 durchgeführt. Eingesetzter Kraftstoff: Euro-Super bleifrei.

**Tabelle 2**

| Additiv aus Beispiel | Dosierung [ppm] | Einlaßventilablagerungen [mg]* | | | | |
|---|---|---|---|---|---|---|
| | | Ventile | 1 | 2 | 3 | 4 |
| 1 | 800 | | 11 (542) | 8 (441) | 8 (405) | 17 (623) |
| 2 | 800 | | 10 (447) | 6 (262) | | |
| 3 | 800 | | 2 (255) | 1 (155) | 2 (150) | 1 (395) |
| 4 | 800 | | 0 (255) | 1 (155) | 0 (150) | 0 (395) |
| 5 | 800 | | 2 (255) | 3 (155) | 2 (150) | 4 (395) |
| 6 | 800 | | 0 (300) | 0 (168) | 2 (175) | 2 (355) |
| 7 | 800 | | 12 (300) | 2 (300) | 6 (300) | 2 (355) |

| | | | | | | |
|---|---|---|---|---|---|---|
| * Werte in Klammern: Ablagerungen ohne Additivzusatz; die unterschiedlichen Werte sind durch Unterschiede beim eingesetzten Euro-Super bleifrei bedingt. | | | | | | |

## Patentansprüche

1. Kraft- oder Schmierstoffadditive, erhältlich durch Umsetzung eines von einem oder mehreren 1-Alkenen mit 3 bis 24 Kohlenstoffatomen und 0 bis 50 Gew.-% Ethen abgeleiteten ethylenisch ungesättigten Poly-1-alkens mit
a) einer Verbindung der allgemeinen Formel I, 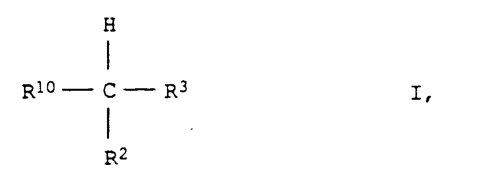 und/oder
b) einer Verbindung der allgemeinen Formel II, 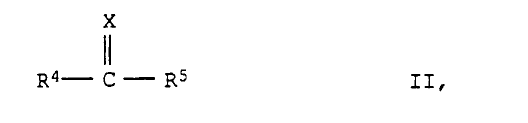 worin
X für O oder NR⁷ steht,
R¹⁰ die Bedeutung
CN, COOH, C(O)OR⁹, C(O)O(O)CR⁶, CONR⁶R⁷, C(O)R⁹, C(S)R⁹, CHO, CH (NR⁶R⁷) R⁶, SCR⁶R⁷R⁸ oder OR⁶ hat,
R² und R³ gleich oder verschieden sind und R¹⁰, Wasserstoff oder einen hiervon verschiedenen organischen Rest darstellen,
R⁴ und R⁵ gleich oder verschieden sind und Wasserstoff OR⁹, NR⁷R⁸ oder einen gegebenenfalls substituierten (Cyclo)alkylrest oder Arylrest bedeuten,
R⁶, R⁷ und R⁸ gleich oder verschieden und jeweils Wasserstoff oder ein organischer Rest sind und
R⁹ einen von Wasserstoff verschiedenen organischen Rest bedeutet,
wobei mindestens zwei der Reste R² bis R¹⁰ Teil eines Ringes sein können.

2. Kraft- oder Schmierstoffadditive nach Anspruch 1, dadurch gekennzeichnet, daß das eingesetzte Poly-1-alken ein zahlenmittleres Molekulargewicht von 150 bis 5000 hat.

3. Kraft- oder Schmierstoffadditive nach Anspruch 1 oder 2, dadurch gekennzeichnet, daß mindestens einer der Substituenten R⁴ und R⁵ von Wasserstoff verschieden ist.

4. Kraft- oder Schmierstoffadditive nach einem der Ansprüche 1 bis 3, dadurch gekennzeichnet, daß mindestens einer der Substituenten R⁶ und R⁷ von Wasserstoff verschieden ist.

5. Verfahren zur Herstellung von Kraft- oder Schmierstoffadditiven, dadurch gekennzeichnet, daß ein von einem oder mehreren 1-Alkenen mit 3 bis 24 Kohlenstoffatomen und 0 bis 50 Gew.-% Ethen abgeleitetes ethylenisch ungesättigtes Poly-1-alken in Gegenwart eines radikalbildenden Initiators unter radikalbildenden Bedingungen mit
a) einer Verbindung der allgemeinen Formel I, 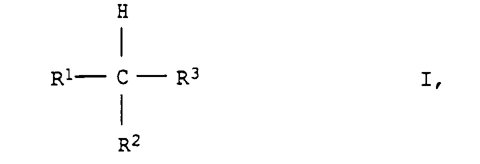 und/oder
b) einer Verbindung der allgemeinen Formel II, 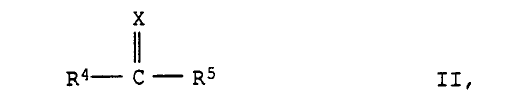 worin
X für O oder NR⁷ steht,
R¹ die Bedeutung
CN, COOH, C(O)OR⁹, C(O)O(O)CR⁶, CONR⁶R⁷, C(O)R⁹, C(S)R⁹, CHO, CH(NR⁶R⁷)R⁶, SCR⁶R⁷R⁸, NR⁷R⁹ oder OR⁶ hat,
R² und R³ gleich oder verschieden sind und R¹, Wasserstoff oder einen hiervon verschiedenen organischen Rest darstellen,
R⁴ und R⁵ gleich oder verschieden sind und Wasserstoff OR⁹, NR⁷R⁸ oder einen gegebenenfalls substituierten (Cyclo)alkylrest oder Arylrest bedeuten,
R⁶, R⁷ und R⁸ gleich oder verschieden und jeweils Wasserstoff oder ein organischer Rest sind und
R⁹ einen von Wasserstoff verschiedenen organischen Rest bedeutet,
wobei mindestens zwei der Reste R¹ bis R⁹ Teil eines Ringes sein können,
umgesetzt wird.

6. Kraft- oder Schmierstoffzusammensetzung, enthaltend mindestens ein Additiv gemäß Anspruch 1 oder Anspruch 5.

7. Kraftstoffzusammensetzung nach Anspruch 6, dadurch gekennzeichnet, daß sie das Additiv in einer Menge von 10 bis 5000 ppm enthält.

8. Schmierstoffzusammensetzung nach Anspruch 6, dadurch gekennzeichnet, daß sie das Additiv in einer Menge von 0,5 bis 10 Gew.-%, bezogen auf das Gesamtgewicht der Zusammensetzung, enthält.

## Claims

1. A fuel or lubricant additive obtainable by reacting an ethylenically unsaturated poly-1-alkene, derived from one or more 1-alkenes of 3 to 24 carbon atoms and from 0 to 50% by weight of ethene, with
a) a compound of the formula I 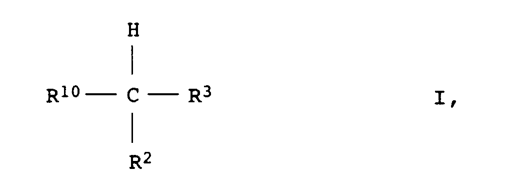 or
b) a compound of the formula II 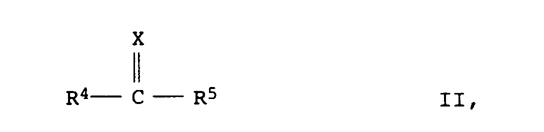 where
X is O or NR⁷,
R¹⁰ is CN, COOH, C(O)OR⁹, C(O)O(O)CR⁶, CONR⁶R⁷, C(O)R⁹, C(S)R⁹, CHO, CH(NR⁶R⁷)R⁶, SCR⁶R⁷R⁸ or OR⁶,
R² and R³ are identical or different and are each R¹⁰, hydrogen or an organic radical differing therefrom,
R⁴ and R⁵ are identical or different and are each hydrogen, OR⁹, NR⁷R⁸ or an unsubstituted or substituted (cyclo)alkyl radical or aryl radical,
R⁶, R⁷ and R⁸ are identical or different and are each hydrogen or an organic radical and
R⁹ is an organic radical differing from hydrogen,
and at least two of the radicals R² to R¹⁰ may be part of a ring.

2. A fuel or lubricant additive as claimed in claim 1, wherein the poly-1-alkene used has a number average molecular weight of from 150 to 5,000.

3. A fuel or lubricant additive as claimed in claim 1 or 2, wherein at least one of the substituents R⁴ and R⁵ is not hydrogen.

4. A fuel or lubricant additive as claimed in any of claims 1 to 3, wherein at least one of the substituents R⁶ and R⁷ is not hydrogen.

5. A process for the preparation of a fuel or lubricant additive, wherein an ethylenically unsaturated poly-1-alkene derived from one or more 1-alkenes of 3 to 24 carbon atoms and from 0 to 50% by weight of ethene is reacted in the presence of a free radical initiator under free radical-forming conditions with
a) a compound of the formula I 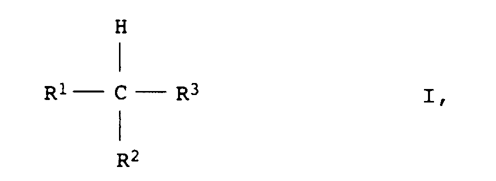 or
b) a compound of the formula II 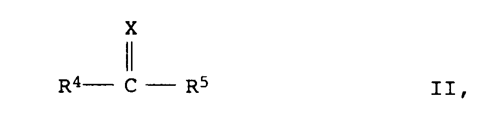 where
X is O or NR⁷,
R¹ is CN, COOH, C(O)OR⁹, C(O)O(O)CR⁶, CONR⁶R⁷, C(O)R⁹, C(S)R⁹, CHO, CH(NR⁶R⁷)R⁶, SCR⁶R⁷R⁸, NR⁷R⁹ or OR⁶,
R² and R³ are identical or different and are each R¹, hydrogen or an organic radical differing therefrom,
R⁴ and R⁵ are identical or different and are each hydrogen, OR⁹, NR⁷R⁸ or an unsubstituted or substituted (cyclo)alkyl radical or aryl radical,
R⁶, R⁷ and R⁸ are identical or different and are each hydrogen or an organic radical and
R⁹ is an organic radical differing from hydrogen,
and at least two of the radicals R¹ to R⁹ may be part of a ring.

6. A fuel or lubricant composition containing at least one additive as claimed in claim 1 or claim 5.

7. A fuel composition as claimed in claim 6, which contains the additive in an amount of from 10 to 5,000 ppm.

8. A lubricant composition as claimed in claim 6, which contains the additive in an amount of from 0.5 to 10% by weight, based on the total weight of the composition.

## Revendications

1. Additifs pour carburants ou lubrifiants, obtenus par réaction d'un poly(1-alcène) à insaturation éthylénique dérivé d'un ou plusieurs 1-alcènes à 3-24 atomes de carbone et de 0 à 50% en poids d'éthylène, avec
a) un composé de formule générale I, 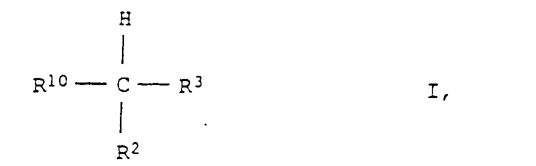 et/ou
b) un composé de formule générale II, 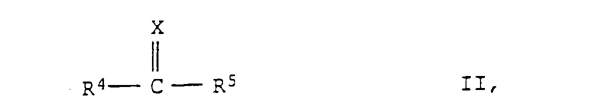 dans lesquelles
X est mis pour O ou NR⁷
R¹⁰ est mis pour
CN, COOH, C(O)OR⁹, C(O)O(O)CR⁶, CONR⁶R⁷, C(O)R⁹, C(S)R⁹,
CHO, CH(NR⁶R⁷)R⁶, SCR⁶R⁷R^{B} ou OR⁶
R² et R³ sont identiques ou différents et sont mis pour R¹⁰, un atome d'hydrogène, ou un reste organique différent de ceux-ci,
R⁴ et R⁵ sont identiques ou différents et sont mis pour un atome d'hydrogène, OR⁹, NR⁷R⁸ ou un reste aryle ou (cyclo)alkyle éventuellement substitués,
R⁶, R⁷ et R⁸ sont identiques ou différents et sont chacun un atome d'hydrogène ou un reste organique et
R⁹ est mis pour un reste organique autre qu'un atome d'hydrogène,
deux au moins des restes R² à R¹⁰ pouvant faire partie d'un cycle.

2. Additifs pour carburants ou lubrifiants selon la revendication 1, caractérisés en ce que le poly(1-alcène) utilisé a une masse moléculaire moyenne en nombre de 150 à 5000.

3. Additifs pour carburants ou lubrifiants selon la revendication 1 ou 2, caractérisés en ce qu'au moins un des substituants R⁴ et R⁵ n'est pas un atome d'hydrogène.

4. Additifs pour carburants ou lubrifiants selon l'une quelconque des revendications 1 à 3, caractérisés en ce qu'au moins un des substituants R⁶ et R⁷ n'est pas un atome d'hydrogène.

5. Procédé de préparation d'additifs pour carburants ou lubrifiants, caractérisé en ce que l'on fait réagir, en présence d'un amorceur formant des radicaux dans des conditions de formation de radicaux, un poly(1-alcène) à insaturation éthylénique dérivé d'un ou plusieurs 1-alcènes à 3-24 atomes de carbone et de 0 à 50% en poids d'éthylène, avec
a) un composé de formule générale I, 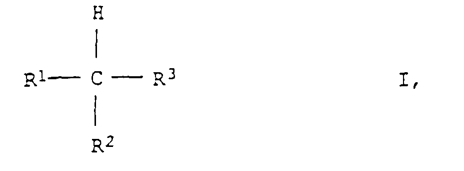 et/ou
b) un composé de formule générale II, 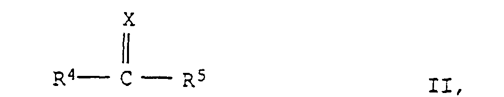 dans lesquelles
X est mis pour O ou NR⁷
R¹ est mis pour
CN, COOH, C(O)OR⁹, C(O)O(O)CR⁶, CONR⁶R⁷, C(O)R⁹, C(S)R⁹, CHO, CH(NR⁶R⁷)R⁶, SCR⁶R⁷R⁸, NR⁷R⁹ ou OR⁶
R² et R³ sont identiques ou différents et sont mis pour R¹, un atome d'hydrogène, ou un reste organique différent de ceux-ci,
R⁴ et R⁵ sont identiques ou différents et sont mis pour des atomes d'hydrogène, OR⁹, NR⁷R⁸ ou un reste aryle ou (cyclo)alkyle éventuellement substitués,
R⁶, R⁷ et R⁸ sont identiques ou différents et sont chacun un atome d'hydrogène ou un reste organique et
R⁹ est mis pour un reste organique autre qu'un atome d'hydrogène,
deux au moins des restes R¹ à R⁹ pouvant faire partie d'un cycle.

6. Compositions de carburants ou de lubrifiants contenant au moins un additif selon la revendication 1 ou la revendication 5.

7. Compositions de carburants selon la revendication 6, caractérisée en ce qu'elles contiennent l'additif en une quantité de 10 à 5000 ppm.

8. Compositions de lubrifiants selon la revendication 6, caractérisées en ce qu'elles contiennent l'additif en une quantité de 0,5 à 10% en poids, par rapport au poids total de la composition.
